Europäisches Patentamt

(19) **European Patent Office**

Office européen des brevets

(11) Veröffentlichungsnummer : **0 119 601**
**B1**

(12) ## EUROPÄISCHE PATENTSCHRIFT

(45) Veröffentlichungstag der Patentschrift :
**16.06.87**

(51) Int. Cl.⁴ : **H 04 M   1/58**

(21) Anmeldenummer : **84102868.1**

(22) Anmeldetag : **15.03.84**

(54) **Gabelschaltung für eine zentralgespeiste Teilnehmerstation.**

(30) Priorität : **18.03.83 DE 3309822**

(43) Veröffentlichungstag der Anmeldung :
**26.09.84 Patentblatt 84/39**

(45) Bekanntmachung des Hinweises auf die Patenterteilung : **16.06.87 Patentblatt 87/25**

(84) Benannte Vertragsstaaten :
**AT BE CH DE IT LI LU NL**

(56) Entgegenhaltungen :
**DE-A- 2 811 065**
**US-A- 3 955 053**
**US-A- 3 987 253**

(73) Patentinhaber : **Siemens Aktiengesellschaft Berlin und München**
**Wittelsbacherplatz 2**
**D-8000 München 2 (DE)**

(72) Erfinder : **Ritz, Hermann, Dipl.-Phys.**
**Josefinenstrasse 6**
**D-8000 München 71 (DE)**

EP 0 119 601 B1

## Beschreibung

Die Erfindung betrifft eine Gabelschaltung für über eine a/b-Ader zentralgespeiste Teilnehmerstation in Fernmelde-, insbesondere Fernsprechanlagen mit einem Mikrofon, einem Fernhörer sowie einer Leitungsnachbildung.

Bei der Herstellung von Fernsprechapparaten ist man bestrebt, induktive als Übertrager ausgebildete Schaltungselemente zu vermeiden, um das Gewicht sowie den Platzbedarf der Teilnehmerstation zu verringern. Eine derartige Schaltungsanordnung ist z. B. aus der DE-A-2 512 562 bekannt. Durch die DE-A-2 148 929 ist es weiterhin bekannt, zum Betrieb der Wandler jeweils einen Verstärker vorzusehen.

Aufgabe der Erfindung ist es, eine Gabelschaltung aufzuzeigen, bei der Verstärker entfallen können und wobei der Eingangswiderstand des Fernsprechapparates dennoch kapazitiv ist.

Gelöst wird die Aufgabe dadurch, daß zwischen der a/b-Ader nacheinander ein erster ohmscher Widerstand und ein kapazitiver Fernhörer geschaltet ist, daß parallel dazu ein Mikrofon und eine Transistordrossel geschaltet ist, wobei der Anschlußpunkt zwischen dem ersten ohmschen Widerstand und dem Fernhörer sowie der Anschlußpunkt zwischen Mikrofon und der Transistordrossel durch einen weiteren ohmschen Widerstand miteinander verbunden sind, und daß parallel zur Transistordrossel eine Leitungsnachbildung geschaltet ist.

Bisher wurden, wie bereits erwähnt, übertragerlose Schaltungen mit Verstärkern in Sende- und Empfangsrichtung verwendet. Solche Schaltungen werden meistens mit integrierten Sprechschaltungs-IC's ausgeführt, die neben den beiden Verstärkern Stabilisierungsschaltungen beinhalten und zusätzlichen Bauteileaufwand für eine äußere Beschaltung z. B. für die Einstellung des Arbeitspunktes, der Verstärkungen und des Eingangswiderstandes benötigen. Sie führen deshalb zu höheren Herstellungskosten als die erfindungsgemäße Ausführung der einfachen Widerstandsbrücke.

Der Gabelübertrager wird durch die beiden Widerstände ersetzt. Außerdem ist gegenüber den üblichen Schaltungen erfindungsgemäß Mikrofon und Fernhörer vertauscht. Durch die Verwendung eines Fernhörers mit kapazitivem Scheinwiderstand, z. B. einer Piezohörkapsel, ergibt sich an den Anschlüssen a/b ein kapazitiver Eingangswiderstand. Dieser wird weitgehend durch die Kapazität des Fernhörers und dem ersten Widerstand ($R_1$) bestimmt. Die anderen Zweige der Schaltung, die hauptsächlich aus ohmschen Widerständen bestehen, die der Kapazität in der Nachbildung parallel oder in Reihe geschaltet sind, haben nur geringen Einfluß auf den Eingangswiderstand.

Das Mikrofon M liegt parallel zu den Widerständen $R_1$ und $R_2$. Um das Mikrofon mit den üblichen Speiseströmen zu versorgen und um den Gleichstromwiderstand der Fernsprecherschaltung in den üblichen Grenzen von 200-400 $\Omega$ zu halten, ist parallel zur Nachbildung eine Transistordrossel geschaltet.

Vorteilhaft ist es, daß die Transistordrossel sowie die Leitungsnachbildung durch einen in Reihe mit einem ohmschen Widerstand geschalteten Transistor (Emitter-Kollektor-Strecke) gebildet ist, dessen Basis an einen Spannungsteiler angeschlossen ist, und daß zwischen der Basis und der b-Ader sowie dem Mikrofon je ein Kondensator geschaltet ist.

Diese Schaltung hat den Vorteil, daß die durch den Spannungsteiler gebildeten Spannungsabfälle für andere Zwecke mit ausgenutzt werden können.

So ist es zweckmäßig, daß der Spannungsabfall am ohmschen Widerstand zur Speisung eines Lauthörverstärkers verwendet wird.

Weiterhin ist es zweckmäßig, daß der Spannungsabfall zwischen Transistor und dem Widerstand zur Speisung eines MFV-Generators verwendet wird.

Zur Speisung anderer Schaltungsteile im Fernsprechapparat z. B. von einer Tastenwahlschaltung oder eines Lauthörverstärkers, können an der Transistordrossel die Spannungen $U_1$ und/oder $U_2$ abgenommen werden. Der Anschluß eines MFV-Generators an den Speisepunkt $U_1$ ist besonders vorteilhaft, weil die in der Tastwahlschaltung erforderliche Drossel entfallen kann. Zur Speisung eines Lauthörverstärkers eignet sich der Speisepunkt $U_2$, da dem Widerstand $R_6$ keine Wechselspannung überlagert ist.

Im folgenden sei die Erfindung anhand von zwei Figuren näher erläutert.

.Es zeigen

Figur 1 eine Gabelschaltung mit Widerständen und einer Transistordrossel und

Figur 2 die Gabelschaltung nach Fig. 1 mit Einzelheiten der Transistordrossel.

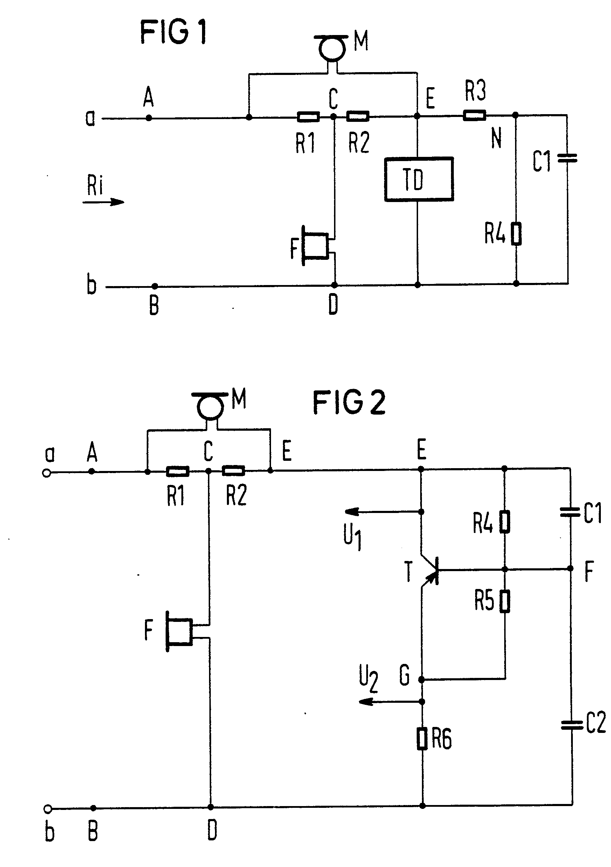

Bei der in Fig. 1 dargestellten Schaltung sind die Leitungsadern a, b an den Schaltungspunkten A, B der Fernhörer F mit den Schaltungspunkten C, D und das Mikrofon M mit den Schaltungspunkten A, E verbunden. Zwischen den Schaltungspunkten A und C befindet sich ein Widerstand $R_1$, zwischen den Schaltungspunkten E und C ein Widerstand $R_2$. Weiterhin ist zwischen E und D eine Transistordrossel TD und parallel dazu eine Nachbildung $R_3$, $C_1$, $R_4$ geschaltet. Die Transistordrossel TD dient dazu, daß ein Gleichstrom durch das Mikrofon M fließen kann. Der Widerstand ist daher klein gegenüber den Widerständen der Nachbildung. Für den Wechselstrom ist diese Drossel jedoch hochohmig. Der Fernhörer F wird durch einen kapazitiven Wandler gebildet. Er ist damit ersatzschaltmäßig einem Kondensator gleichzusetzen, der für den Gleichstrom einen hohen Widerstand bildet.

In der Fig. 2 ist zusätzlich zu den beschriebenen Bauelementen die Transistordrossel und die Nachbildung näher dargestellt. Zwischen den Anschlußpunkten E, D ist ein pnp-Transistor T und ein Widerstand $R_6$ in Reihe geschaltet. Gesteuert wird der Transistor T durch den Spannungsteiler $R_4$, $R_5$, der an der Basis des Transistors liegt. Parallel zu $R_4$ ist ein Kondensator $C_1$ geschaltet. Zwischen den Anschlußpunkten F und D liegt ein weiterer Kondensator $C_2$. Am Anschlußpunkt E kann eine Spannung $U_1$ für einen MFV-Generator abgegriffen werden, wobei dann die normalerweise in der Tastwahlschaltung erforderliche Drossel entfallen kann. Am Anschlußpunkt G kann die Spannung $U_2$ abgenommen werden, die sich besonders für die Speisung eines Lauthörverstärkers eignet, da dem Widerstand $R_6$ keine Wechselspannung überlagert ist.

**Patentansprüche**

1. Gabelschaltung für über eine a/b-Ader zentralgespeiste Teilnehmerstation in Fernmelde-, insbesondere Fernsprechanlagen mit einem Mikrofon, einem Fernhörer sowie einer Leitungsnachbildung, dadurch gekennzeichnet, daß zwischen der a/b-Ader nacheinander ein erster ohmscher Widerstand ($R_1$) und ein kapazitiver Fernhörer (F) geschaltet ist, daß parallel dazu ein Mikrofon (M) und eine Transistordrossel (TD) geschaltet ist, wobei der Anschlußpunkt zwischen dem ersten ohmschen Widerstand ($R_1$) und dem Fernhörer (F) sowie der Anschlußpunkt zwischen Mikrofon (M) und der Transistordrossel durch einen weiteren ohmschen Widerstand ($R_2$) miteinander verbunden sind, und daß parallel zur Transistordrossel eine Leitungsnachbildung geschaltet ist.

2. Gabelschaltung nach Anspruch 1, dadurch gekennzeichnet, daß die Transistordrossel sowie die Leitungsnachbildung durch einen in Reihe mit einem ohmschen Widerstand ($R_6$) geschalteten Transistor (T) (Emitter-Kollektor-Strecke) gebildet ist, dessen Basis an einem Spannungsteiler ($R_4$, $R_5$) angeschlossen ist, und daß zwischen der Basis und der b-Ader sowie dem Mikrofon (M) je ein Kondensator ($C_1$, $C_2$) geschaltet ist.

3. Gabelschaltung nach Anspruch 2, dadurch gekennzeichnet, daß der Spannungsabfall am ohmschen Widerstand ($R_6$) zur Speisung eines Lauthörverstärkers verwendet wird.

4. Gabelschaltung nach Anspruch 2, dadurch gekennzeichnet, daß der Spannungsabfall zwischen Transistor (T) und dem Widerstand ($R_6$) zur Speisung eines MFV-Generators verwendet wird.

**Claims**

1. A hybrid circuit for a subscriber station, centrally fed via the a/b-wire of a telecommunications system, in particular a telephone system, comprising a microphone, a receiver and a balancing dummy line, characterised in that a first resistor ($R_1$) and a capacitive receiver (F) are connected in series between the a/b-wires, that a microphone (M) and a transistor choke (TD) are connected in parallel therewith, the junction point between the first resistor ($R_1$) and the receiver (F) and the junction point between the microphone (M) and the transistor choke being connected to one another by a further resistor ($R_2$) and that a balancing dummy line network is connected parallel to the transistor choke.

2. A hybrid circuit as claimed in Claim 1, characterised in that the transistor choke and the balancing dummy line network are formed by a transistor (T) (emitter-collector-path) connected in series with a resistor ($R_6$), where the base of said transistor is connected to a potential divider ($R_4$, $R_5$), and that a capacitor ($C_1$, $C_2$) is connected between the base and the b-wire and between the base and the microphone (M).

3. A hybrid circuit as claimed in Claim 2, characterised in that the voltage drop across the resistor ($R_6$) is used to feed a loudspeaker amplifier.

4. A Hybrid circuit as claimed in Claim 2, characterised in that the voltage drop between the transistor (T) and the resistor ($R_6$) is used to feed a MFV-generator.

**Revendications**

1. Termineur pour un poste d'abonné, alimenté de façon centralisée par un conducteur a/b, dans des installations de télécommunications, notamment des installations de téléphonie, comportant un microphone, un écouteur ainsi qu'un équilibreur de ligne, caractérisé par le fait qu'entre le conducteur a/b se trouve branchés successivement une première résistance ohmique ($R_1$) et un écouteur capacitif (F), qu'en parallèle à cet ensemble se trouvent branchés un microphone (M) et une bobine d'arrêt à transistor (TD), le point de raccordement entre la première résistance ohmique ($R_1$) et l'écouteur (F) ainsi que le point de raccordement entre le microphone (M) et la bobine d'arrêt à transistor étant reliés entre eux par l'intermédiaire d'une autre résistance ohmique ($R_2$), et qu'un équilibreur de ligne est branché en parallèle avec la bobine d'arrêt à transistor.

2. Termineur selon la revendication 1, caractérisé en ce que la bobine d'arrêt à transistor ainsi que l'équilibreur de ligne sont formés par un transistor (T) branché en série avec une résistance ohmique ($R_6$) (voie émetteur-collecteur) et dont la base est raccordée à un diviseur de tension ($R_4$, $R_5$), et que les condensateurs respectifs ($C_1$, $C_2$) sont branchés entre la base et le conducteur b et entre la base et le microphone (M.).

3. Termineur suivant la revendication 2, caractérisé par le fait que la chute de tension dans la résistance ohmique ($R_6$) est utilisée pour alimenter un amplificateur de haut-parleur.

4. Termineur suivant la revendication 2, caractérisé par le fait que la chute de tension entre le transistor (T) et la résistance ($R_6$) est utilisée pour alimenter un générateur MFV.

FIG 1

FIG 2